# EUROPÄISCHE PATENTSCHRIFT

(11) **EP 0 562 151 B1**
(45) Veröffentlichungstag und Bekanntmachung des Hinweises auf die Patenterteilung: **23.12.1998**
(21) Anmeldenummer: 92105368.2
(22) Anmeldetag: 27.03.1992
(51) Int. Cl.: G06F 15/78, G06F 13/40

(54) **Integrierter Mikroprozessor**
Integrated microprocessor
Microprocesseur intégré

(43) Veröffentlichungstag der Anmeldung: 29.09.1993
(73) Patentinhaber: SIEMENS AKTIENGESELLSCHAFT, 80333 München (DE)
(72) Erfinder: Fleck, Rod, W-8000 München 80 (DE); Böning, Werner, Dipl.-Ing. (FH), W-8000 München 19 (DE)

(56) Entgegenhaltungen:
- EP-A- 0 159 548
- EP-A- 0 243 113
- EP-A- 0 315 275
- EP-A- 0 466 970
- ELEKTRONIK Bd. 38, Nr. 23, 10. November 1989, M]NCHEN, DE Seiten ASIC40 - 42 J. BOSE 'Komplexe Logik schnell und sicher auf Silizium integrieren'
- PROCEEDINGS ICASSP '87: 1987 INTERNATIONAL CONFERENCE ON ACOUSTICS, SPEECH AND SIGNAL PROCESSING Bd. 1, 1987, DALLAS, TX, USA Seiten 523 - 526 K.L.KLOKER 'The architecture and applications of the Motorola DSP56000 digital signal processor family'
- ELEKTRONIK Bd. 37, Nr. 19, 16. September 1988, M]NCHEN, DE Seiten 91 - 95 F.-J.LEYRER 'Signalprozessor f r "kostenempfindliche" Anwendungen TMS320-Familie erweitert'

## Beschreibung

Die Erfindung betrifft einen integrierten Mikroprozessor gemäß dem Oberbegriff des Patentanspruchs 1.

Ein integrierter Mikroprozessor ist z.B. aus elektronik report 10A Oktober 1990 auf Seite 58ff beschrieben. Insbesondere die Figur auf Seite 59 der Druckschrift zeigt den prinzipiellen Aufbau eines derartigen Mikroprozessors. Der beschriebene Mikroprozessor besteht aus einer zentralen Recheneinheit "core processor" und verschiedenen Peripherieeinheiten "serial I/O", "timer", "DMA-controller". Alle Einheiten sind über einen internen Bus "inter-module-bus" miteinander verbunden. Weiterhin ist eine Bussteuereinheit "system-interface" vorgesehen, die einen extern anschließbaren Bus mit dem internen Bus verbindet.

Der interne Bus derartiger Anordnungen ist meist auf die innerhalb eines derartigen Mikroprozessors befindlichen Peripherieeinheiten und die zentrale Recheneinheit abgestimmt. Die Bussteuereinheit dient dazu die Signale des internen Busses so umzusetzen, daß sie an das Timing des externen Busses angepaßt werden. Platzersparnis und Kostenersparnis erfordern es oftmals bestehende Anordnungen mit einem derartigen Mikroprozessor und Peripherieeinheiten, die am externen Bus angeschlossen sind, in einen einzigen Baustein zu integrieren. Bei einer Anordnung gemäß der Figur auf Seite 59 der Druckschrift muß, um eine derartige externe Peripherieeinheit an den internen Bus anzukoppeln und somit mit zu integrieren, die gesamte Ansteuer- bzw. Ankopplungseinheiten der Peripherieeinheit an den internen Bus angepaßt werden.

Dies geht insbesondere aus Spalte 1, Seite 60 hervor, wo beschrieben ist, daß ein extern angeschlossener DMA-Bausteine langsamer arbeitet, als ein mitintegrierter DMA-Baustein. Zudem ist oftmals der Adressierungsbereich des internen Busses beschränkt, so daß eine Ankopplung am internen Bus unter der Adresse, die bei Verbindung mit dem externen Bus vorlag, nicht mehr realisiert werden kann und somit eine neue Adresse und Decodierung notwendig wird. Weiterhin können mitintegrierte Peripherieeinheiten nicht auf die gleiche Weise mit bisher verwendeten Testpattern wie die "stand-alone"-Bausteine getestet werden. Dies führt zu erheblichem Entwicklungsaufwand, der zu oft unerwünscht langen Entwicklungszeiten führt.

Ein gattungsgemäßer integrierter Mikroprozessor ist aus ELEKTRONIK Bd. 38, Nr. 23, 10. November 1989, München, Seiten 40 - 42, J. Bose "Komplexe Logik schnell und sicher auf Silizium integriert" bekannt. Hier ist ein integrierter Mikroprozessor angegeben, bei dem ein interner Bus über Verbindungseinheiten mit einem externen Bus starr verbunden sind. Peripherieeinheiten, die am internen Bus angeschlossen sind, lassen sich nicht gleichzeitig an den externen Bus anschließen. Gleichzeitig ist eine An-/Abkopplung des externen Busses an den internen Bus, beispielsweise zu Testzwecken, nicht möglich.

Weitere integrierte Mikroprozessoren mit einem internen Bus und einen externen Bus sind aus der EP-A-0 243 113 und aus der EP-A-0 466 970 bekannt.

Aufgabe der Erfindung ist es einen integrierten Mikroprozessor anzugeben, der die oben beschriebenen Nachteile vermeidet.

Diese Aufgabe wird durch den kennzeichnenden Teil des Anspruchs 1 gelöst. Weiterbildungen der Erfindung sind durch Unteransprüche gekennzeichnet.

Vorteil der Erfindung ist, daß die Integration eines bisher extern angeschlossenen Peripherieeinheit innerhalb der integrierten Anordnung keine Neu- bzw. Änderungsentwicklung erfordert, da die gesamte Logik nun unverändert übernommen werden kann.

Ein weiterer Vorteil ist, daß keinerlei Unterschied besteht, ob die Peripherieeinheit extern oder intern angeschlossen ist, so daß am bestehenden System keinerlei Veränderungen vorzunehmen sind und z.B. externe Busmaster weiterhin auf die jetzt mitintegrierte Peripherieeinheit zugreifen können, so als wären sie noch am externen Bus angeschlossen.

Ein weiterer Vorteil ist, daß durch die erfindungsgemäße Anordnung bei Integration einer Peripherieeinheit auch keinerlei Softwareänderung notwendig ist. Da das Timing des internen und externen Busses exakt das gleiche ist und wie oben beschrieben die Logik nicht verändert werden muß, kann mit dem gleichen Adressierungsverfahren gearbeitet werden und bei zeitkritischen Programmierungen wie z.B. Zeitschleifen muß keinerlei Änderung vorgenommen werden, da das dynamische Verhalten unverändert bleibt.

Ein weiterer Vorteil ist, daß für eine Echtzeit Hardware-Emulation keine speziellen Emulatoren notwendig sind. Ein weiterer Vorteil ist die weiterhin unveränderbare Testbarkeit der nun mitintegrierten Peripherieeinheiten. Da sich an den Anschlüssen nichts geändert hat und alle Testanschlüsse zugänglich sind, kann die am internen Bus angeschlossene Peripherieeinheit mit den gleichen Testpattern- und methoden getestet werden wie beim bisherigen "stand alone"-Baustein.

Ein weiterer Vorteil ist, daß bei Neuentwicklung einer zu integrierenden Peripherieeinheit der interne Anschluß an die zentrale Recheneinheit ohne Restriktionen erfolgen kann, also mit allem Komfort wie bei externem Anschluß. Damit ist volle Flexibilität beim Busanschluß, das komplette Adressierungsvolumen, die Nutzung von z. B. Chip-Select-Einrichtungen und ein standardisiertes Bustiming gewährleistet. Dies wiederum erlaubt die Fremdentwicklung von Peripherieeinheiten in Full-Custom- oder Asic-Design unabhängig vom Mikroprozessorhersteller.

Werden Peripherieeinheiten die bisher in einer bestimmten Technologie hergestellt wurden, durch das Mitintegrieren in einer neuen Technologie hergestellt, so kann unter Umständen ein schnellerer Betrieb der Peripherieeinheit ermöglicht werden. Sogenannte "wait-states" könnten nun entfallen. Auch eine derartige Anpassung ist ohne Aufwand möglich, könnte aber Softwareänderungen erforderlich machen.

Die Erfindung wird nachfolgend anhand von fünf Figuren näher erläutert.
- Figur 1: zeigt ein Blockschaltbild der erfindungsgemäßen Anordnung,
- Figur 2: zeigt den nrinzipiellen Aufbau des internen Busses,
- Figur 3: zeigt eine Ausführung eines externen Busses für eine Anordnung mit Mikroprozessor und externer Peripherieeinheit,
- Figur 4: zeigt eine Ausführung eines Steuerregisters der Bussteuereinheit,
- Figur 5: zeigt zwei Mikroprozessoren im Emulationsbetrieb.

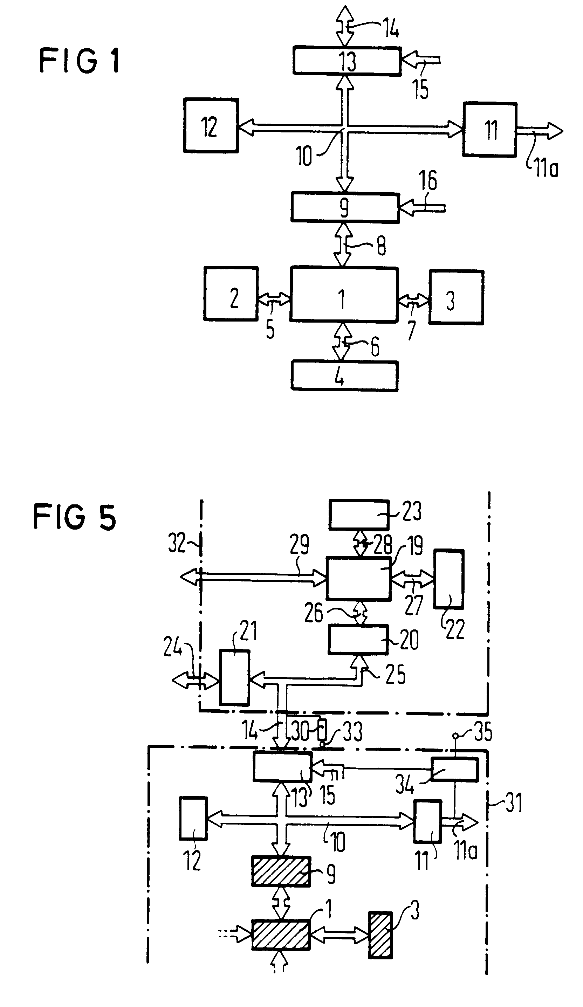

In Figur 1 ist mit 1 eine zentrale Recheneinheit bezeichnet. An diese ist z. B. über einen Bus 5 eine RAM-Einheit 2 angeschlossen. Eine ROM-Einheit 3 ist über einen weiteren Bus 7 mit der zentralen Recheneinheit 1 verbunden. Weiterhin kann über einen Hochgeschwindigkeitsbus 6 eine sehr schnelle Peripherieeinheit 4, z.B. ein AD-Wandler, angeschlossen sein. Eine Bussteuereinheit 9 ist über einen Verbindungsbus 8 ebenfalls mit der zentralen Recheneinheit 1 verbunden. Der interne Bus ist mit 10 bezeichnet. Dieser verbindet die Bussteuereinheit 9 mit externen Peripherieeinheiten 11, 12. Die Peripherieeinheit 11 oder 12 kann z. B. zusätzliche Ausgänge aufweisen, welche funktionsbedingte Signale erzeugen oder aufnehmen. Diese können über zusätzliche Leitungen 11a mit zusätzlichen Anschlüssen des Mikroprozessors verbunden sein und so von außen zugänglich werden. Die Bussteuereinheit 9 kann weiterhin durch spezielle Signale über Steuerleitungen 16 gesteuert werden. Der Anschluß des internen Busses 10 an einen externen Bus 14 erfolgt über eine steuerbare Treiberstufe 13. Diese erhält zusätzlich Signale über Steuerleitungen 15. Im einfachsten Fall kann die steuerbare Treiberstufe 13 auch entfallen und somit der interne Bus 10 gleichzeitig den externen Bus 14 bilden.

Erfindungswesentlich ist, daß der interne Bus 10 ein exaktes Abbild des externen Systembusses 14 ist. Dies wird dadurch ermöglicht, daß die Bussteuereinheit 9 auf dem Chip zwischen dem internen Bus und der zentralen Recheneinheit liegt und das statische und dynamische Verhalten der Busse 10 und 14 bestimmt. Wegen der Identität des internen Busses 10 mit dem externen Bus 14 kann eine daran angeschlossene Peripherieeinheit 11, 12 ohne Unterschied genauso betrieben werden wie am externen Bus 14. Belegt ein externer Busmaster den Systembus 10, 14, so kann dieser genauso auf eine Peripherieeinheit 11, 12 zugreifen wie auf andere Systemkomponenten am externen Bus. Auf diese Weise ist Master/Slave-Betrieb möglich, unabhängig ob eine Peripherieeinheit am externen oder internen Bus angeschlossen ist.

Wird eine steuerbare Treibereinheit 13 vorgesehen, so sind zusätzliche Betriebsmodi erzeugbar. Die steuerbare Treiberstufe 13 wird von der Bussteuereinheit 9 und/oder von zusätzlichen Steuersignalen an den Steuerleitungen 15 gesteuert. Dies ist notwendig um der Treiberstufe 13 anzuzeigen in welcher Richtung die Signale geschaltet werden müssen. Greift z. B. die zentrale Recheneinheit 1 oder ein am internen Bus 10 angeschlossener Master auf ein am externen Bus 14 angeschlossene Peripherieeinheit zu, so müssen die Adressen vom internen Bus 10 zum externen Bus 14 geschaltet werden, wo hingegen die Datensignale in Abhängigkeit eines Lese- oder Schreibzugriffs vom internen zum externen Bus oder umgekehrt geleitet werden müssen. Dasselbe gilt für diverse Steuersignale. Dies kann z. B. durch bestimmte Steuersignale 15 erreicht werden.

Ein Teil der Busleitungen kann aber auch dazu dienen, den Betriebsmodus anzuzeigen. Hierzu wertet die Bussteuereinheit 9 die ihr zugeführten Signale derart aus, daß sie den jeweils durch die Signale bestimmten bzw. gewünschten Betriebsmodus einstellt und diesen eingestellten Zustand auf den Betriebsmodusleitungen anzeigt. Die angeschlossenen Peripherieeinheiten können dann diesen Betriebsmodus auswerten und entsprechende Funktionen ausführen. Insbesondere die Treiberstufe 13 kann in Abhängigkeit der an den Betriebsmodusleitungen anliegenden Signale die einzelnen Bussignale vom internen Bus zum externen Bus oder umgekehrt treiben.

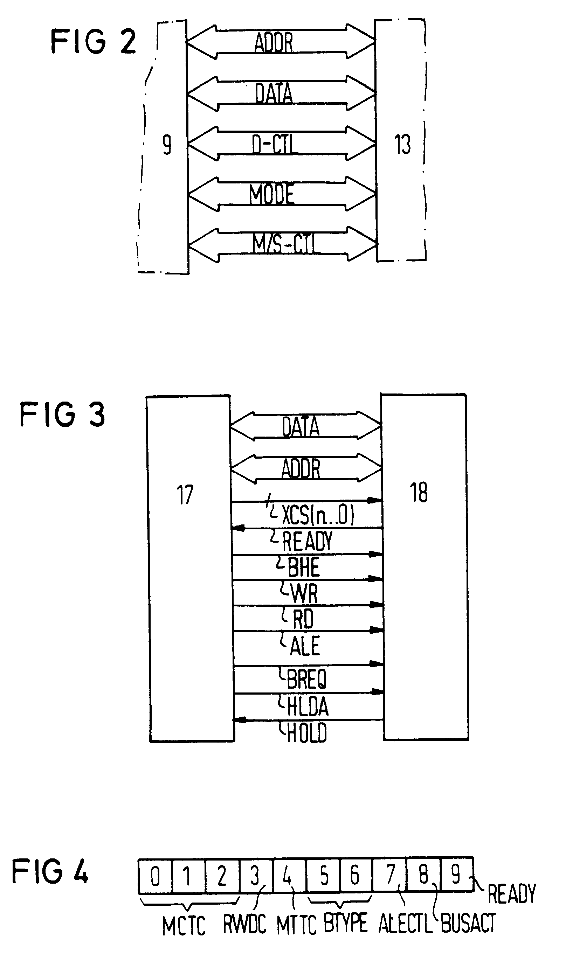

In Figur 2 sind beispielsweise bestimmte Gruppen von Signalleitungen eines erfindungsgemäßen Busses dargestellt. Die Figur zeigt den internen Bus 10 zwischen der Bussteuereinheit 9 und der steuerbaren Treiberstufe 13. An diesen Bus können verschiedenste Peripherieeinheiten angeschlossen werden, die der Übersichtlichkeit halber nicht dargestellt sind. Der Bus weist einen Adreßbus auf, der im Gegensatz zu üblichen Adreßbussen in beide Richtungen Signale führen kann. Dies ist wie oben beschrieben notwendig wenn externe Busmaster auf eine Peripherieeinheit, die am internen Bus angeschlossen ist, zugreifen. Der Datenbus ist wie auch bei einem üblichen Bus ausgebildet. Daten- und Adreßbus können aber auch derart gekoppelt sein, daß eine gemultiplexte Adreßübertragung ermöglicht wird. Dies hat den Vorteil, daß extern anschließbare Peripherieeinheiten weniger Verbindungsleitungen benötigen. Weiterhin sind Datenkontrolleitungen D-CTL vorgesehen, die ebenfalls teilweise in beide Richtungen getrieben werden können. Der Grund hierfür ist derselbe wie bei den Adreßleitungen. Die bereits oben beschriebenen Betriebsmodusleitungen sind mit MODE bezeichnet. Sie werden in dieser Ausführungsform nur von der Bussteuereinheit 9 erzeugt und sind Signale die unidirektional betrieben werden. Diese Signale können aber auch von der Treiberstufe 13 oder irgendeinen am internen Bus 10 angeschlossenen Busmaster erzeugt werden. Letztlich bilden Master/ Slave-Kontrolleitungen M/S-CTL den Abschluß. Diese Leitungen sind ebenfalls in Abhängigkeit des Buszuteilungsprotokolls teilweise bidirektional betreibbar wie bereits für den Adreß-, Daten- und Datenkontrollsignale beschrieben. Sie ermöglichen den Betrieb von zusätzlichen Busmastern am internen wie auch externen Bus 10, 14.

Ist am externen Bus 14 ein Busmaster angeschlossen und greift dieser auf ein ebenfalls am externen Bus 14 angeschlossene Peripherieeinheit zu, so muß der am externen Bus 14 angeschlossene Master zuerst die Kontrolle über den Bus erhalten. Hierzu sendet er über eine der M/S-CTL-Leitung eine Anfrage zur Übernahme der Buskontrolle. Im dargestellten Fall benötigt der am externen Bus 14 angeschlossene Busmaster jedoch lediglich die Kontrolle des externen Busses 14. Dies kann der Bussteuereinheit 9 entweder durch Software oder eine spezielle Leitung der M/S-CTL-Busleitungen angezeigt werden. In bisherigen Realisierungen gemäß dem Stand der Technik müßte nun die zentrale Recheneinheit 1 stillgelegt werden damit der externe Busmaster die Kontrolle über den Bus erhält. Da der externe Busmaster jedoch nur die Kontrolle des externen Busses 14 und nicht auch zusätzlich die des internen Busses 10 benötigt, da er im beschriebenen Fall lediglich auf am externen Bus 14 angeschlossene Peripherieeinheiten zugreift, genügt es wenn die Bussteuereinheit 9 den externen Bus 14 vom internen Bus 10 abkoppelt. Dies kann durch die steuerbare Treiberstufe 13 erfolgen. Der externe Busmaster hat nun die Möglichkeit mit den am externen Bus 14 angeschlossenen Peripherieeinheiten zu kommunizieren, währenddessen die zentrale Recheneinheit 1 über die am internen Bus 10 angeschlossenen Peripherieeinheiten 11, 12 weiterhin verfügen kann. Dies stellt einen erheblichen Vorteil dar, da die Rechenleistung von einem externen Busmaster in derartigen Fällen nicht gebremst wird.

In den sonst üblichen Fällen, bei denen ein externer oder interner Busmaster auf eine interne oder externe Peripherieeinheit zugreift, muß allerdings wie bisher die zentrale Recheneinheit 1 derart stillgelegt werden, daß sie nicht auf den internen oder externen Bus 10, 14 zugreifen kann. Ein Deaktivieren der zentralen Recheneinheit 1 ist aber hier auch nicht notwendig. Die zentrale Recheneinheit 1 muß lediglich vom internen Bus 10 abgekoppelt werden. Dies kann über die Bussteuereinheit 9 erfolgen. Zum Beispiel kann während eines DMA-Zugriffs, der zwischen internem Bus 10 und externem Bus 14 oder umgekehrt erfolgt, die zentrale Recheneinheit 1 mit den über die zusätzlichen Busse 5, 6, 7 angeschlossenen Peripherieeinheiten 2, 3, 4 kommunizieren.

Sollte ein am externen Bus 14 angeschlossener Busmaster auf ein am internen Bus 10 angeschlossene Peripherieeinheit 11, 12 zugreifen wollen, so wird dies der Bussteuereinheit über einen am Anschluß des Mikroprozessors anliegendes Signal angezeigt und die Bussteuereinheit 9 koppelt die zentrale Recheneinheit 1 vom internen Bus 10 ab. Die Treiberstufe 13 wird nun so gesteuert, daß der externe Bus 14 an den internen Bus 10 angekoppelt wird. Dies bedeutet, daß die Datenbusleitungen weiterhin bidirektional betrieben werden, die Adreßleitungen vom am externen Bus 14 anliegenden Busmaster erzeugt werden und über die steuerbare Treiberstufe 13 in Richtung des internen Busses 10 getrieben werden, und daß die Steuersignale je nach ihrer Art vom oder zum externen Bus 14 getrieben werden. Ein derartiges Abkoppeln der zentralen Recheneinheit 1 wäre auch durch Steuerung über einen zusätzlichen Anschluß des Mikroprozessors möglich. Dies könnte in einem sogenannten Monitor-Betriebsmodus der Fall sein. Der zusätzliche Anschluß würde ein Signal über die zusätzlichen Steuerleitungen 15 und/oder an die Treiberstufe 13 und die Bussteuereinheit 9 senden und den oben beschriebenen Betriebsmodus einleiten. Im Monitorbetriebsmodus können dann am externen Bus 14 angeschlossene Peripherieeinheiten, Busmaster oder Prozessoren auf die am internen Bus 10 oder externen Bus 14 angeschlossenen Peripherieeinheit zugreifen. Im Monitor-betriebsmodus kann ein Busmaster auf am internen Bus 10 angeschlossene Peripherieeinheiten synchron zum internen Takt oder asynchron im eigenen Takt zugreifen.

Figur 3 zeigt eine Ausführungsart des externen Busses 14. Mit 17 ist der integrierte Mikroprozessor bezeichnet und mit 18 eine am externen Bus 14 angeschlossene Peripherieeinheit. Der externe Bus 14 weist hier beispielsweise folgende Signalleitungen auf:
- Data:: Dieser Teil des Busses enthält z. B. 16 Datenleitungen. Wird der externe Bus 14 wie später beschrieben, auch als gemultiplexter Adreß/Datenbus benutzt, so werden diese Leitungen auch für die Ubertragung der unteren Adreßbits benützt. Bei Adreßübertragungen, sind die Adressen nur für eine bestimmte Zeit, z. B. 15 ns, nach der fallenden Flanke des ALE-Signals gültig. Dieser Teil des Busses wird hauptsächlich zur Datenübertragung benutzt, die durch die Signale RD oder WR gesteuert wird. Die Daten werden von der Peripherieeinheit auf den Bus gelegt während das Signal RD aktiviert wird, egal ob der Zugriff von der zentralen Recheneinheit 1 oder von einer anderen Peripherieeinheit erfolgt.
- ADDR:: Dieser Teilbus enthält alle Adreßleitungen, z. B. 24-Bit-Adreßbus. Die Signale an diesem Teilbus sind mit der fallenden Flanke des ALE-Signals gültig.
- CS (n...0):: Ein aktives Signal auf einer dieser Leitungen wird von der Bussteuereinheit erzeugt, wenn ein am Adreßbus ADDR anliegende Adresse mit einem in einem zugehörigen Register bestimmten Adreßbereich übereinstimmt. Diese Signale dienen somit zur Chip-Select-Steuerung. Eine aktivierte Chip-Select-Signalleitung gibt somit an, daß eine bestimmte Peripherieeinheit angesprochen werden soll. Es können sowohl Chip-Select-Signale für externe und/oder interne Peripherieeinheiten erzeugt werden.
- READY:: Dieses Signal zeigt das Ende eines Zugriffs an. Die Verwendung dieses Steuersignals kann ein- oder ausgeschaltet werden mittels eines Registers in der Bussteuereinheit 9. Ist es aktiviert, so muß die Peripherieeinheit dieses Signal erzeugen, entweder wenn die Daten von der Peripherieeinheit geschrieben wurden oder wenn die Peripherieeinheit die Daten gelesen hat. Dieses Signal wird nicht benötigt, wenn die Bussteuereinheit so programmiert ist, daß sie sogenannte Wate-States erzeugt. In diesem Fall ist der Zugriff auf eine Peripherieeinheit mit Beendigung dieser Wate-States beendet. Dieses Signal kann sowohl vom internen Bus 10 zum externen Bus 14 oder umgekehrt getrieben werden.
- BHE:: Dieses Signal gibt an, daß während des Zugriffs auf das höherwertige Byte zugegriffen wird. Dieses Signal wird insbesondere dann in Verbindung mit der Adressleitung A0 benötigt, wenn am externen oder internen Bus auf eine Peripherieeinheit zugegriffen wird, deren Datenbus nur 8-Bit breit ist.
- WR:: Dieses Signal gibt in Verbindung mit einem Chip-Select den Start eines Schreibzugriffs auf eine Peripherieeinheit an. Die auf dem Bus geschriebenen Daten sind stabil bevor dieses Signal aktiviert wird und bleiben so lange stabil bis das Signal wieder deaktiviert wird.
- RD:: Dieses Signal gibt den Start eines Lesezugriffs zu einer Peripherieeinheit an. Insbesondere in Verbindung mit den Chip-Select-Signalen XCS kontrolliert dieses Signal die Datenübertragung über den Datenbus.
- BREQ:: Dieses Signal wird von der Bussteuereinheit erzeugt und zeigt an, daß die zentrale Recheneinheit einen Zugriff auf den externen Bus 14 anfordert. Dieses Signal wird nur in zwei Betriebsarten aktiviert: Hold und Monitor Modus.
- HLDA:: Dieses Signal zeigt an, daß die zentrale Recheneinheit 1 vom Bus abgekoppelt ist und der externe Busmaster am internen oder externen Bus die Kontrolle über den jeweiligen Bus hat.
- HOLD:: Dieses Signal zeigt an ob eine externe Peripherieeinheit die Kontrolle über den Bus übernehmen will.

Der Übersichtlichkeit halber wurden weitere Signale in Figur 3 nicht näher dargestellt. So fehlen z. B. Reset, Interrupt, Taktleitungen. Diese können wie üblich ausgebildet sein und je nach Verwendung des Bussystems vorgesehen werden.

Die Funktion der Steuersignale kann auch über die Bussteuereinheit 9 bestimmt werden. So kann z. B. das RD-Signal zu einem kombinierten RD/WR-Signal, das ALE-Signal zu einem Adress-Strobe-Signal AS und das WR-Signal zu einem Data-Strobe-Signal DS umgewandelt werden je nachdem in welchem Busmode sich die gesamte Busanordnung befindet.

Einen weiteren Betriebsmodus stellt der sogenannte Visible-Modus dar. Dieser kann sowohl durch ein Signal auf einer entsprechenden Kontrollsignalleitung des Busses, durch Software, d. h. durch Setzen eines Bits in einem entsprechenden Register, oder durch ein über einen zusätzlichen Anschluß zugeführtes Signal eingestellt werden. Üblicherweise werden Zugriffe die auf dem internen Bus 10 stattfinden nicht auf dem externen Bus 14 angezeigt. Im Visible-Modus aber werden die am internen Bus 10 geführten Signale über die Treiberstufe 13 auf dem externen Bus 14 angezeigt. Der Benutzer kann so alle Zugriffe innerhalb des internen Busses 10 verfolgen. Insbesondere in der Entwicklungsphase eines derartigen Mikroprozessors kann der Visible-Betriebsmodus zu einer schnellen Fehlerbeseitigung führen. In diesem Betriebsmodus kann z. B. ein Logik-Analysator oder ein sogenannter "Trace-Buffer" verwendet werden.

Alle bisher beschriebenen Betriebsmodi können auch anstelle über spezielle Steuerleitungen softwaremäßig eingestellt werden. Hierzu weist die Bussteuereinheit 9 diverse Steuerregister auf, deren Inhalt den gewünschten Betriebsmodus einstellt. Es können zusätzliche Steuerregister vorgesehen sein, deren Inhalt jeweils einen Adreßbereich bestimmt. Der jeweilige Betriebsmodus wird dann eingestellt, wenn Zugriffe auf bestimmte Adreßbereiche stattfinden. Dies kann insbesondere dann sinnvoll sein, wenn diese adreßabhängige Betriebsmodusumschaltung in Verbindung mit dem Visible-Modus kombiniert wird.

Während eines Resets werden üblicherweise alle Treiberstufen eines derartigen Mikroprozessors also auch die steuerbare Treiberstufe 13 in einen hochohmigen Zustand geschaltet. Während dieses Resetvorgangs kann die Konfiguration des internen Busses 10 und des externen Busses 14 vorprogrammiert werden. Die Treiberstufe 13 kann z. B. interne pull-down-Widerstände vorsehen, die z. B. den Datenbus des externen Busses 14 auf logisch Null legen. Der Anwender seinerseits kann nun über pull-up-Widerstände ein bestimmtes Codewort an den Datenbus anlegen, welches während der Resetphase von der Bussteuereinheit 9 erkannt wird. Je nachdem welcher Code am Eingang des Datenbusses des externen Busses 14 angelegt, wird ein entsprechender Betriebsmodus eingestellt. Auch können bestimmte Betriebsarten für am internen Bus 10 angeschlossene Peripherieeinheiten 11, 12 auf diese Weise vorbestimmt werden. Die Auswahl verschiedener Betriebsmodi sowohl für den internen und externen Bus 10, 14 wie auch für die an diesen Bus angeschlossene Peripherieeinheiten 11, 12 ist lediglich durch die Anzahl von Eingängen des Mikroprozessors beschränkt. Selbstverständlich könnten anstelle der pull-down pull-up und anstelle der pull-up pull-down Widerstände oder ähnliches zur Codeerzeugung verwendet werden.

In Figur 4 ist beispielsweise eine Ausführung eines Steuerregisters der Bussteuereinheit 9 dargestellt. Jedes Kästchen stellt ein Bit eines derartigen Steuerregisters dar. Ein derartiges Steuerregister ermöglicht die Anpassung an verschiedene dynamische Gegebenheiten des Busses. So können beispielsweise durch die Registerstellen Bit 0 bis Bit 2 MCTC wait-states erzeugt werden, die den Zugriff auf Schreib/Lesespeicher steuern. Das Bit 3 RWDC ermöglicht eine verzögerte Steuerung der read-write-Signale. Mittels des MTTC-Bits 4 kann die Speicher "tri-state"-Zeit er-weitert werden. Die zwei Bits 5, 6 BTYPE geben die im Moment gültige Konfiguration des externen und internen Busses 10, 14 an. Uber Bit 7 ALECTL kann das ALE-Signal verlängert werden. Bit 8 BUSACT zeigt an ob der externe Bus 14 aktiviert ist. Bit 9 READY zeigt an ob die Bussteuereinheit 9 zusätzliche wait-states entsprechend den MCTC-Bis generieren soll oder ob das Ready-Signal von einer Peripherieeinheit selbst erzeugt werden soll.

Um mit allen möglichen Peripherieeinheiten verschiedenster Hersteller kommunizieren zu können ohne dabei großen Hardware-Aufwand betreiben zu müssen, kann der interne bzw. der externe Bus 10, 14 über ein derartiges Register im Adreß/Datenmultiplex-Betrieb oder im nicht-gemultiplexten Betrieb programmiert werden. Zusätzliche Steuerregister können Adreßbereiche definieren, welche eine adreßabhängige Einstellung des internen und externen Busses 10, 14 bewirken. So steuern derartige Register bei Übereinstimmung mit dem jeweils durch ihren Inhalt definierten Adreßbereich den Bus entweder als gemultiplexten Adreß-Datenbus oder als nicht-gemultiplexten Adreß-Datenbus. Insbesondere bei Verwendung von älteren Bausteinen deren Timing den üblichen heutigen Geschwindigkeitsanforderungen nicht gewachsen ist, kann über die oben beschriebenen Bits des Steuerregisters das dynamische Verhalten des Busses bestimmt werden. So kann beispielsweise ein Steuersignal verlängert werden, welches den Adreß- oder Datentransfer regelt und somit einen Betrieb derartiger Peripherieeinheiten an dem erfindungsgemäßen Prozessor ermöglichen.

Weiterhin können Steuerregister vorgesehen sein, über die die Datenbreite des internen bzw. externen Busses programmierbar ist. Dies ist insbesondere sinnvoll, da viele Bausteine nur einen 8-Bit breiten Datenbus aufweisen. Bei wortweiser interner Organisation derartiger Bausteine müssen alle Zugriffe von Außen über die lediglich 8-Bit breite Datenbus erfolgen.

Um Software-Aufwand zu vermeiden, kann der Bus beispielsweise auf 8 oder 16 Bit oder höher eingestellt werden. Dies hängt lediglich von der grundsätzlichen Datenbreite des gewählten Datenbusses und von der Peripherieeinheit ab. Die Steuerung der Breite des Datenbusses kann ebenfalls über adreßabhängige Steuerregister erfolgen. Dabei definieren der Inhalt dieser Steuerregister einen Adreßbereich, und die Steuerregister steuern in Abhängigkeit von der am Bus anliegenden Adresse bei Übereinstimmung mit dem Adreßbereich dieses Registers die Datenbreite des internen bzw. externen Busses 10, 14.

Bei der Entwicklung mit derart komplexen Mikroprozessoren müssen für die Echtzeit-Emulation sogenannte Bondout-Chips bereitgestellt werden. Bisher mußte für jedes Derivat eines derartigen Mikroprozessors, d. h. einen Mikroprozessor mit unter schiedlichen Peripherieeinheiten, ein spezieller Bondout-Chip zur Verfügung gestellt werden. Das erfindungsgemäße Einbringen des internen Busses 10 ermöglicht nun daß nur ein Einziger Bondout-Chip entwickelt werden muß, der für alle Derivate mit den unterschiedlichsten Peripherieeinheiten verwendet werden kann.

In Figur 5 ist ein derartiger Bondout-Chip mit 32 bezeichnet. Er weist ebenfalls eine zentrale Recheneinheit 19 auf, die über interne Busse 27, 28 mit RAM 22 und anderen Peripherieeinheiten 23 verbunden ist. Der Bondout-Chip 32 weist ebenfalls wie der erfindungsgemäße Mikroprozessor eine Bussteuereinheit 20 und einen internen Bus auf der hier mit 25 bezeichnet ist. Es ist ebenfalls eine steuerbare Treiberstufe 21 vorgesehen, die den internen Bus 25 mit einem externen Bus 24 verbindet. Gegenüber einer normalen Ausführung eines Mikroprozessors weist der Bondout-Chip 32 zusätzliche nicht dargestellte Anschlüsse auf, über die der interne Bus 25 direkt nach Außen geführt wird.

Mit 31 ist ein ebenfalls erfindungsgemäßer Mikroprozessor dargestellt. Dieser entspricht exakt dem in Figur 1 dargestellten. Der Übersichtlichkeit halber wurde die Darstellung einiger Peripherieeinheiten und Signalleitungen verzichtet. Die Peripherieeinheit 11 erzeugt oder empfängt zusätzliche interne bzw. externe Signale über die Leitungen lla. Eine der internen Signalleitungen wird über einen steuerbaren Multiplexer 34 zu einem externen Anschluß 35 des Mikroprozessors 31 geführt. Der Multiplexer 34 wird hier über die Treiberstufe 13 gesteuert. Aus Gründen der Übersichtlichkeit wurde auf die weiterführende Darstellung der internen bzw. externen zusätzlichen Signalleitungen lla verzichtet. Insbesondere sind weiterführende Signalleitungen vom/ zum Multiplexer 34 nicht dargestellt. Ebenso wurde auf die Verbindung des Anschlusses 35 mit dem Bondout-Chip 32 verzichtet.

Der Bondout-Chip 32 ist über den internen Bus 25, welcher über die zusätzlichen Anschlüsse nach Außen geführt ist und über den externen Bus 14 mit der Treiberstufe 13 des erfindungsgemäß ausgestalteten Mikroprozessors 31 verbunden. Zusätzlich wird in den meisten Fällen der ROM-Bus 29 über zusätzliche Anschlüsse nach außen geführt. Wie bereits oben beschrieben kann die Konfiguration des Mikroprozessors 31 durch einen pull-up-Widerstand der in Figur 5 mit 30 dargestellt ist, vorbestimmt werden. Dieser pull-up-Widerstand 30 ist mit einer der Datenleitungen des externen Busses 14 verbunden und stellt symbolisch das Codewort dar, welches den Mikroprozessor während des Resets in der Emulation-Modus schaltet. Er ist andererseits mit einer Versorgungsspannung, die über die Anschlußklemme 33 zugeführt wird, verbunden.

Durch den pull-up-Widerstand 30 wird während des Resets der in üblicher Weise ausgestaltete erfindungsgemäße Mikroprozessor 31 in den sogenannten Emulationsbetriebsmodus geschaltet. In diesem Betriebsmodus werden nun alle Steuer- und Peripherieeinheiten des Mikroprozessors 31 mit Ausnahme der am internen Bus 10 angeschlossenen Peripherieeinheiten 11, 12 und der Treiberstufe 13 deaktiviert. In Figur 5 sind diejenigen deaktivierten Einheiten schraffiert dargestellt. Die Treiberstufe 13 koppelt nun den internen Bus 10 des Mikroprozessors 31 direkt an den internen Bus 25 des Bondout-Chips 32. Dabei spielt es keine Rolle, daß zwischen dem internen Bus 25 des Bondout-Chips 32 und dem internen Bus 10 des Mikroprozessors 31 die Treiberstufe 13 geschaltet ist, da das dynamische und statische Verhalten des internen bzw. externen Busses absolut identisch sind. Die zentrale Recheneinheit 19 des Bondout-Chips 32 kann nun auf die Peripherieeinheiten 11, 12 des Mikroprozessors 31 zugreifen, als wären diese an seinem internen Bus 25 angeschlossen, da die Bussteuereinheit 13 die Ankopplung des internen Busses 10 an den internen Bus 25 so steuert, als wären diese miteinander verbunden. Die gesamte Anordnung mit den beiden Mikroprozessoren 31 und 32 weist nach Außen hin die gleichen Anschlüsse wie ein einziger Mikroprozessor auf. Zusätzlich können noch weitere Steuersignale z. B. für den Emulationsbetrieb nach außen geführt werden. Hierzu können Multiplexer 33 dienen, die z. B. ein internes Interruptsignal, das an die stillgelegte zentrale Recheneinheit 1 gesendet wird an einen im Emulationsmodus nicht benutzten Anschluß 35 umleiten. Dieser so enstandene Mikroprozessor 31, 32 kann im jeweiligen Zielsystem verwendet werden. Mit nur einem einzigen Bondout-Chip 32 können so eine Vielzahl von Derivarten emuliert werden ohne daß ein jeweils neuer Bondout-Chip hergestellt werden müßte.

Im Monitor- oder Emulationsmodus können Testpattern wie bisher für die "stand-alone"-Peripherieeinheit an die nun mitintegrierten Peripherieeinheit angelegt werden. Beispielsweise können Echtzeit- "in system"-Tracepattern, Logik-Simulation- und Fertigungstestpattern und dergleichen verwendet werden.

## Patentansprüche

1. Integrierter Mikroprozessor mit
- einer Vielzahl von Anschlüssen,
- einer zentralen Recheneinheit (1, 19),
- mindestens einem internen Bus (10), der eine Vielzahl von Signalleitungen aufweist,
- mindestens einer Peripherieeinheit (11, 12), die an den internen Bus (10) angeschlossen ist,
- einem externen Bus (14), der eine Vielzahl von Signalleitungen aufweist und über eine entsprechende Anzahl von Anschlüssen mit dem integrierten Mikroprozessor verbunden ist, wobei der interne Bus (10) wenigstens die gleiche Anzahl von die gleichen Signale führenden Signalleitungen wie der externe Bus (14) aufweist,
- Verbindungsmitteln (13), die den internen Bus (10) über eine entsprechende Anzahl von Anschlüssen mit dem externen Bus (14) verbinden,
**dadurch gekennzeichnet,** daß
- der interne Bus (10) das gleiche Steuerverhalten wie der externe Bus (14) aufweist, so daß eine Peripherieeinheit (11, 12) unverändert sowohl am externen Bus (14) wie auch am internen Bus (10) anschließbar ist, und daß
- eine Bussteuereinheit (9) vorgesehen ist, die die zentrale Recheneinheit (1) an den internen Bus (10) anbindet und die die Verbindungsmittel (13) zur Ankopplung und/oder Abkopplung des externen Busses (14) an den internen Bus (10) steuert.

2. Integrierter Mikroprozessor nach Anspruch 1,
**dadurch gekennzeichnet**, daß in Abhängigkeit von Betriebsmodus des Busses (10) mindestens ein Steuersignal erzeugt wird, welches mindestens einer Signalleitung des internen Busses zugeführt wird.

3. Integrierter Mikroprozessor nach Anspruch 1 oder 2,
**dadurch gekennzeichnet**, daß das Verbindungsmittel eine steuerbare Treiberstufe ist, und daß die Treiberstufe jedes Bussignal in Abhängigkeit von mindestens einem Steuersignal der Bussteuereinheit (9) vom internen Bus (10) zum externen Bus (14) oder vom externen Bus (14) zum internen Bus (10) treibt.

4. Integrierter Mikroprozessor nach Anspruch 3,
**dadurch gekennzeichnet**, daß die steuerbare Treiberstufe (13) in Abhängigkeit von einem Steuersignal den internen Bus (10) vom externen Bus (14) abkoppelt.

5. Integrierter Mikroprozessor nach Anspruch 3 oder 4,
**dadurch gekennzeichnet**, daß die steuerbare Treiberstufe (13) in Abhängigkeit von einen am Anschluß des Mikroprozessors anliegenden Steuersignal den Signalzustand wenigstens einer Signalleitung des internen Busses (10) an den externen Bus (14) schaltet.

6. Mikroprozessor nach einem der Ansprüche 3 bis 5,
**dadurch gekennzeichnet**, daß die Bussteuereinheit (9) in Abhängigkeit von einem am Anschluß des Mikroprozessors anliegenden Signal die zentrale Recheneinheit (1) vom internen Bus (10) abkoppelt und die Treiberstufe (13) so gesteuert wird, daß der externe Bus (14) an den internen Bus (10) angekoppelt wird.

7. Mikroprozessor nach einem der Ansprüche 2 bis 6,
**dadurch gekennzeichnet**, daß in Abhänigkeit von ein am internen Bus (10) oder externen Bus (14) anliegenden Signal die zentrale Recheneinheit (1) vom internen Bus (10) abgekoppelt wird und die Treiberstufe (13) so gesteuert wird, daß der externe Bus (14) an den internen Bus (10) angekoppelt wird.

8. Mikroprozessor nach einem der Ansprüche 2 bis 7,
**dadurch gekennzeichnet**, daß die Bussteuereinheit (9) mindestens ein Steuerregister aufweist, dessen Inhalt die Betriebsart des internen Busses (10) und des externen Busses (14) bestimmt.

9. Mikroprozessor nach einem der Ansprüche 2 bis 8,
**dadurch gekennzeichnet,** daß während eines von Außen zugeführten Rücksetzsignals ein Signal, welches an einem der Anschlüsse anliegt, die Betriebsart des internen und externen Busses (10, 14) bestimmt.

10. Mikroprozessor nach einem der Ansprüche 1 bis 9,
**dadurch gekennzeichnet,** daß zusätzliche Anschlüsse vorgesehen sind, die direkt mit den Signalleitungen des internen Busses (25) verbunden sind.

11. Mikroprozessor nach Anspruch 10,
**dadurch gekennzeichnet,** daß der interne Bus (25) über die zusätzlichen Anschlüsse und über die steuerbare Treiberstufe (13) eines zusätzlichen Mikroprozessors (31) mit dessen internen Bus (10) verbunden ist.

12. Mikroprozessor nach einem der Ansprüche 1 bis 9,
**dadurch gekennzeichnet,** daß der Mikroprozessor in eine Betriebsart schaltbar ist, bei der die zentrale Recheneinheit (1) und alle anderen Einheiten (2, 3, 4, 9) mit Ausnahme des internen Busses (10) und der Verbindungsmittel (13) sowie der am internen Bus (10) angeschlossenen Peripherieeinheiten (11, 12) deaktiviert werden.

13. Mikroprozessor nach Anspruch 12,
**dadurch gekennzeichnet**, daß Mittel vorgesehen sind, die wenigstens eine mit einer Peripherieeinheit verbundene interne Signalleitung mit wenigstens einem Anschluß des Mikroprozessors verbinden.

14. Mikroprozessor nach einem der vorhergehenden Ansprüche,
**dadurch gekennzeichnet,** daß der interne bzw. externe Bus (10, 14) mindestens eine Selektierleitung aufweist, das die Bussteuereinheit (9) jeweils eine der Selektierleitungen zugehöriges Steuerregister aufweist, dessen Inhalt einen Adreßbereich definiert, daß die Selektierleitungen in Abhängigkeit von der am Bus anliegenden Adresse bei Ubereinstimmung mit dem Adressbereich des jeweiligen Steuerregisters aktiviert oder deaktiviert werden.

15. Mikroprozessor nach einem der vorhergehenden Ansprüche,
**dadurch gekennzeichnet**, daß die Bussteuereinheit (9) Steuermittel enthält, die den Bus entweder als gemultiplexten Adreß-Datenbus oder als nicht-gemultiplexten Adreß-Datenbus betreiben.

16. Mikroprozessor nach Anspruch 15,
**dadurch gekennzeichnet**, daß die Bussteuereinheit (9) mindestens ein Steuerregister aufweist, dessen Inhalt einen Adreßbereich definiert, das in Abhängigkeit von der am Bus anliegenden Adresse bei Ubereinstimmung mit dem Adressbereich des jeweiligen Steuerregisters der Bus entweder als gemultiplexter Adreß-Datenbus oder als nicht-gemultiplexter Adreß-Datenbus betrieben wird.

17. Mikroprozessor nach einem der vorhergehenden Ansprüche,
**dadurch gekennzeichnet**, daß die Bussteuereinheit (9) ein Steuerregister aufweist, dessen Inhalt anzeigt, ob und für welche Dauer ein Steuersignal auf dem internen bzw. externen Bus verlängert wird.

18. Mikroprozessor nach einem der vorhergehenden Ansprüche,
**dadurch gekennzeichnet**, daß die Bussteuereinheit (9) Steuermittel enthält, die die Datenbreite des internen bzw. externen Busses programmierbar macht.

19. Mikroprozessor nach Anspruch 18,
**dadurch gekennzeichnet**, daß die Bussteuereinheit (9) ein Steuerregister aufweist, dessen Inhalt einen Adressbereich definiert, daß in Abhängigkeit von der am Bus anliegenden Adresse bei Übereinstimmung mit dem Adressbereich dieses Registers die Datenbreite des internen bzw. externen Busses eingestellt wird.

## Claims

1. Integrated microprocessor comprising
- a multiplicity of pins,
- a core processor (1, 19),
- at least one internal bus (10), which exhibits a multiplicity of signal lines,
- at least one peripheral unit (11, 12) which is connected to the internal bus (10),
- an external bus (14) which exhibits a multiplicity of signal lines and is connected to the integrated microprocessor via a corresponding number of pins, the internal bus (10) exhibiting at least the same number of signal lines, carrying the same signals, as the external bus (14),
- connecting means (13) which connect the internal bus (10) to the external bus (14) via a corresponding number of pins,
characterized in that
- the internal bus (10) exhibits the same control characteristics as the external bus (14) so that a peripheral unit (11, 12) can be connected unmodified both to the external bus (14) and to the internal bus (10), and in that
- a bus control unit (9) is provided which interfaces the core processor (1) with the internal bus (10) and which controls the connecting means (13) for coupling and/or decoupling the external bus (14) to/from the internal bus (10).

2. Integrated microprocessor according to Claim 1, characterized in that, in dependence on the operating mode of the bus (10), at least one control signal is generated which is supplied to at least one signal line of the internal bus.

3. Integrated microprocessor according to Claim 1 or 2, characterized in that the connecting means is a controllable driver stage and that the driver stage drives each bus signal, in dependence on at least one control signal of the bus control unit (9), from the internal bus (10) to the external bus (14) or from the external bus (14) to the internal bus (10).

4. Integrated microprocessor according to Claim 3, characterized in that the controllable driver stage (13) decouples the internal bus (10) from the external bus (14) in dependence on a control signal.

5. Integrated microprocessor according to Claim 3 or 4, characterized in that the controllable driver stage (13) connects, in dependence on a control signal present at the pin of the microprocessor, the signal state of at least one signal line of the internal bus (10) to the external bus (14).

6. Microprocessor according to one of Claims 3 to 5, characterized in that the bus control unit (9), in dependence on a signal present at the pin of the microprocessor, decouples the core processor (1) from the internal bus (10) and the driver stage (13) is controlled in such a manner that the external bus (14) is coupled to the internal bus (10).

7. Microprocessor according to one of Claims 2 to 6, characterized in that, in dependence on a signal present at the internal bus (10) or external bus (14), the core processor (1) is decoupled from the internal bus (10) and the driver stage (13) is controlled in such a manner that the external bus (14) is coupled to the internal bus (10).

8. Microprocessor according to one of Claims 2 to 7, characterized in that the bus control unit (9) exhibits at least one control register, the content of which determines the operating mode of the internal bus (10) and of the external bus (14).

9. Microprocessor according to one of Claims 2 to 8, characterized in that, during a reset signal supplied from the outside, a signal which is present at one of the pins determines the operating mode of the internal and external bus (10, 14).

10. Microprocessor according to one of Claims 1 to 9, characterized in that additional pins are provided which are connected directly to the signal lines of the internal bus (25).

11. Microprocessor according to Claim 10, characterized in that the internal bus (25) is connected via the additional pins and via the controllable driver stage (13) of an additional microprocessor (31) to the internal bus (10) of the latter.

12. Microprocessor according to one of Claims 1 to 9, characterized in that the microprocessor can be switched into an operating mode in which the core processor (1) and all other units (2, 3, 4, 9), with the exception of the internal bus (10) and the connecting means (13) and the peripheral units (11, 12) connected to the internal bus (10), are deactivated.

13. Microprocessor according to Claim 12, characterized in that means are provided which connect at least one internal signal line, connected to a peripheral unit, to at least one pin of the microprocessor.

14. Microprocessor according to one of the preceding claims, characterized in that the internal or external bus (10, 14), respectively, exhibits at least one select line, that the bus control unit (9) in each case exhibits a control register which is associated with the select lines and the content of which defines an address area, that the select lines are activated or deactivated in dependence on the address present at the bus in the case of a match with the address area of the respective control register.

15. Microprocessor according to one of the preceding claims, characterized in that the bus control unit (9) contains control means which either operate the bus as multiplexed address data bus or as a non-multiplexed address data bus.

16. Microprocessor according to Claim 15, characterized in that the bus control unit (9) exhibits at least one control register, the content of which defines an address area, and that, in dependence on the address present at the bus, the bus is operated either as multiplexed address data bus or as non-multiplexed address data bus in the case of a match with the address area of the respective control register.

17. Microprocessor according to one of the preceding claims, characterized in that the bus control unit (9) exhibits a control register, the content of which indicates whether a control signal on the internal or external bus is extended and for how long.

18. Microprocessor according to one of the preceding claims, characterized in that the bus control unit (9) contains control means which make it possible to program the data capacity of the internal and, respectively, external bus.

19. Microprocessor according to Claim 18, characterized in that the bus control unit (9) exhibits a control register, the content of which defines an address area, and that, in dependence on the address present at the bus, the data capacity of the internal and, respectively, external bus is adjusted in the case of a match with the address area of this register.

## Revendications

1. Microprocesseur intégré comprenant
- une pluralité de connexions,
- une unité arithmétique centrale (1, 19),
- au moins un bus interne (10), qui comporte une pluralité de lignes de transmission de signaux,
- au moins une unité périphérique (11, 12), qui est reliée au bus interne (10),
- un bus externe (14), qui comporte une pluralité de lignes de transmission de signaux et est relié au microprocesseur intégré via un nombre correspondant de connexions, le bus interne (10) comportant au moins le même nombre de lignes de transmission de signaux transportant les mêmes signaux que le bus externe (14),
- des moyens de liaison (13), qui relient le bus interne (10) au bus externe (14) via un nombre correspondant de connexions,
caractérisé en ce que
- le bus interne (10) présente le même comportement de commande que le bus externe (14), de manière à pouvoir raccorder sans modification une unité périphérique (11, 12) au bus externe (14) et au bus interne (10), et en ce que
- une unité de commande de bus (9) est prévue, qui relie l'unité arithmétique centrale (1) au bus interne (10) et qui commande les moyens de connexion (13) pour connecter le bus externe (14) au bus interne (10) et /ou pour le déconnecter de celui-ci.

2. Microprocesseur intégré selon la revendication 1, caractérisé en ce qu'en fonction du mode de fonctionnement du bus (10), au moins un signal de commande est créé, lequel est amené à au moins une ligne de transmission de signaux du bus interne.

3. Microprocesseur intégré selon la revendication 1 ou 2, caractérisé en ce que le moyen de liaison est un étage de commande pilotable et en ce qu'en fonction d'au moins un signal de commande de l'unité de commande de bus (9), l'étage de commande envoie chaque signal de bus du bus interne (10) au bus externe (14) ou du bus externe (14) au bus interne (10).

4. Microprocesseur intégré selon la revendication 3, caractérisé en ce qu'en fonction d'un signal de commande, l'étage de commande pilotable (13) déconnecte le bus interne (10) du bus externe (14).

5. Microprocesseur intégré selon la revendication 3 ou 4, caractérisé en ce qu'en fonction d'un signal de commande appliqué à la connexion du microprocesseur, l'étage de commande pilotable (13) applique l'état de signal d'au moins une ligne de transmission de signaux du bus interne (10) au bus externe (14).

6. Microprocesseur selon l'une des revendications 3 à 5, caractérisé en ce qu'en fonction d'un signal appliqué à la connexion du microprocesseur, l'unité de commande de bus (9) déconnecte l'unité arithmétique centrale (1) du bus interne (10) et en ce que l'étage de commande (13) est piloté de manière à connecter le bus externe (14) au bus interne (10).

7. Microprocesseur selon l'une des revendications 2 à 6, caractérisé en ce qu'en fonction d'un signal appliqué au bus interne (10) ou au bus externe (14), l'unité arithmétique centrale (1) est déconnectée du bus interne (10) et en ce que l'étage de commande (13) est piloté de manière à connecter le bus externe (14) au bus interne (10).

8. Microprocesseur selon l'une des revendications 2 à 7, caractérisé en ce que l'unité de commande de bus (9) comporte au moins un registre de commande dont le contenu détermine le mode de fonctionnement du bus interne (10) et du bus externe (14).

9. Microprocesseur selon l'une des revendications 2 à 8, caractérisé en ce que durant un signal de réinitialisation amené de l'extérieur, un signal appliqué à l'une des connexions détermine le mode de fonctionnement des bus interne et externe (10, 14).

10. Microprocesseur selon l'une des revendications 1 à 9, caractérisé en ce que des connexions supplémentaires sont prévues, qui sont reliées directement aux lignes de transmission de signaux du bus interne (25).

11. Microprocesseur selon la revendication 10, caractérisé en ce que le bus interne (25) est relié via les connexions supplémentaires et l'étage de commande pilotable (13) d'un microprocesseur supplémentaire (31) au bus interne (10) de celui-ci.

12. Microprocesseur selon l'une des revendications 1 à 9, caractérisé en ce que le microprocesseur peut être commuté sur un mode de fonctionnement, dans lequel l'unité arithmétique centrale (1) et toutes les autres unités (2, 3, 4, 9) sont désactivées, à l'exception du bus interne (10) et des moyens de liaison (13) ainsi que des unités périphériques (11, 12) connectées au bus interne (10).

13. Microprocesseur selon la revendication 12, caractérisé en ce que des moyens sont prévus, qui relient au moins une ligne de transmission de signaux interne reliée à une unité périphérique, à au moins une connexion du microprocesseur.

14. Microprocesseur selon l'une des revendications précédentes, caractérisé en ce que le bus interne resp. externe (10, 14) comporte au moins une ligne de sélection, en ce que l'unité de commande de bus (9) comporte un registre de commande associé à chaque ligne de sélection, dont le contenu définit une zone d'adresse, en ce qu'en fonction de l'adresse appliquée au bus, en cas de correspondance avec la zone d'adresse du registre de commande respectif, les lignes de sélection sont activées ou désactivées.

15. Microprocesseur selon l'une des revendications précédentes, caractérisé en ce que l'unité de commande de bus (9) comporte des moyens de commande qui utilisent le bus soit sous forme de bus de données/d'adresses multiplexé soit sous forme de bus de données/d'adresses non multiplexé.

16. Microprocesseur selon la revendication 15, caractérisé en ce que l'unité de commande de bus (9) comporte au moins un registre de commande dont le contenu définit une zone d'adresse, en ce qu'en fonction de l'adresse appliquée au bus, en cas de correspondance avec la zone d'adresse du registre de commande respectif, le bus est utilisé soit sous forme de bus de données/d'adresses multiplexé soit sous forme de bus de données/d'adresses non multiplexé.

17. Microprocesseur selon l'une des revendications précédentes, caractérisé en ce que l'unité de commande de bus (9) comporte un registre de commande dont le contenu indique si, et pour quelle durée, un signal de commande est prolongé sur le bus interne resp. externe.

18. Microprocesseur selon l'une des revendications précédentes, caractérisé en ce que l'unité de commande de bus (9) comporte des moyens de commande permettant de programmer la largeur de données du bus interne resp. externe.

19. Microprocesseur selon la revendication 18, caractérisé en ce que l'unité de commande de bus (9) comporte un registre de commande dont le contenu définit une zone d'adresse, en ce qu'en fonction de l'adresse appliquée au bus, en cas de correspondance avec la zone d'adresse de ce registre, la largeur de données du bus interne resp. externe est réglée.
